# EUROPEAN PATENT APPLICATION

(11) **EP 1 122 001 A2**
(43) Date of publication of application: **08.08.2001**
(21) Application number: 01101048.5
(22) Date of filing: 18.01.2001
(51) Int. Cl.: B21J 15/04, F16D 13/71, F16B 19/10, F16B 19/06

(54) **Method of riveting in a blind hole and a friction clutch produced using the method**

(30) Priority: 03.02.2000 GB 0002356
(71) Applicant: Automotive Products UK Limited, Leamington Spa, Warwickshire CV31 3ZL (GB)
(72) Inventor: Carpenter, Ronald Dennis, CV34 6BS, Warwickshire (GB)
(74) Representative: Morrall, Roger

(57) **Abstract**

A method of riveting is disclosed in which a rivet (19) having a shank (21) with a hollow region (23) arranged adjacent to a first end (25) of the shank is inserted through a hole (30) in a first member (14) and into a blind hole (20) in a support member (12) so that the first end of the shank contacts the base (26) of the blind hole. The rivet is then compressed against the base of the hole such that the shank of the rivet barrels outwardly to frictionally engage the side (27) of the hole. The side of the blind hole may be provided with an undercut (28), the shank of the rivet barrelling outwards to substantial fill the undercut. The method is particularly suitable for attaching the lift straps (14) of a friction clutch to a pressure plate (12). A friction clutch having lift straps connected to a pressure plate using the method is also claimed.

## Description

This invention relates to a method of riveting into a blind hole and in particular to a method of riveting into a blind hole used to attach a lift strap to a pressure plate of a friction clutch. The invention also relates to a friction clutch produced using the inventive method.

Various methods of riveting into a blind hole are known. Certain of these known methods have been adopted for the purpose of attaching a lift strap to a pressure plate in a friction clutch.

GB 2 280 231 for example discloses a friction clutch in which the pressure plate has a blind hole which is conical in form with the largest diameter of the hole being closest to the base of the hole. In one embodiment the rivet has a through bore into which a tool is inserted. The tool has a diameter larger than the bore such that as the tool is forced into the bore the shank of the rivet is radially expanded to engage with the conical side of the hole. In an alternative embodiment a sphere having a diameter larger than that of the bore is inserted into the through bore so as to radially expand the shank. In a still further embodiment the rivet has a blind bore that extends only part way though the shank. A sphere is placed in the base of the blind hole and the rivet is pressed onto the sphere such that the sphere is forced into the blind bore causing the rivet to expand radially to engage with the conical side of the hole.

It is an objective of the invention to provide an improved method riveting into a blind bore which is simpler and less expensive than the known methods.

It is a further objective of the invention to provide a method of riveting into a blind bore which does not require the use of a tool or insert engaging with a bore in the rivet to radially expand the shank of the rivet.

It is yet a further objective is to provide an improved method of riveting into a blind hole which can be used to attach a lift strap to a clutch pressure plate.

According to a first aspect of the invention there is provided a method of riveting which comprises the steps of:
a) providing a rivet having a shank, the shank being hollow at least in the region adjoining a first end of the shank;
b) inserting the shank of the rivet through a hole in a first member and into a blind hole in a support member so that the first end of the shank contacts the base of the blind hole; and
c) compressing the rivet against the base of the blind hole such that the shank of the rivet barrels outwardly to frictionally engage the side of the hole.

The applicants have found that by taking advantage of the natural tendency for the shank of a hollow rivet to barrel outwards when the rivet is compressed, it is possible to secure a rivet in a blind hole without the need to use tools or inserts to expand the rivet radially. This considerably simplifies the process of riveting reducing both manufacturing time and cost.

Preferably the base of the blind hole is formed substantially flat and perpendicular to the axis of the hole.

It is further preferred that the rivet is made from steel.

Advantageously the method can be used for attaching a lift strap to the pressure plate of a friction clutch, in which case the support member will comprise the pressure plate and the first member will comprise the lift strap.

This method of attaching the lift straps to the pressure plate of a clutch means that the lift straps can be connected within the outer diameter of the friction surface of the pressure plate without the use of conventional lugs projecting radially outwardly of the pressure plate. The absence of these lugs improves the out-of-balance of the pressure plate. Also, if the pressure plate does not have lugs the design of the cover pressing can be simplified since no openings need be provided in the cover which conventionally are provided to accommodate the lugs.

Thus the manufacturing costs of both the pressure plate and the clutch cover can be reduced. Furthermore, the simplified clutch cover design means that the flange which is conventionally bolted to the flywheel can extend around the entire circumference of the cover. This allows more flexibility in selecting different bolt hole and dowel hole patterns permitting the same cover to be used with flywheels having different bolt and dowel configurations and makes the cover more rigid. A further advantage is that the outer diameter of the clutch can be reduced for any given size of drive plate.

Preferably the hollow portion of the shank is provided by a central bore extending at least part way through the rivet. The bore may be a blind bore extending part way along the shank of the rivet from the first end or may by a through bore extending completely through the rivet.

In a preferred embodiment the blind hole in the support member has an undercut in which case it is advantageous if the hollow portion of the shank is arranged so as to substantially align with the undercut when the rivet is inserted in the blind hole. Where an undercut is provided, it is preferable that the shank should barrel outwards so as to substantially fill the undercut. The undercut may be provided near the base of the blind hole or could be provided in a region part way down the hole remote from the base.

In a further preferred embodiment, the rivet has a head which when the rivet is inserted in the blind hole overlies a side of the first member remote from the support member, the length of the rivet and the depth of the blind hole are selected such that when the first end of the shank is in contact with the base of the blind hole there is a gap between the head of the rivet and the first member, the size of the gap being less than the axial extent by which the rivet is subsequently compressed. Preferably, the head of the rivet will be elastically deformed in an axial direction during compression of the rivet so as to firmly clamp the first member to the support member. To assist in the elastic deformation the surface of the head of the rivet closest to the first member may be provided with an undercut in the region where the surface meets the shank.

Alternatively, a flexible washer may be provided between a head of the rivet and the first member such that the flexible washer is compressed during the riveting process to ensure that the first member is securely clamped between the head and the support member. In this case, the gap between the head and the first member prior to compression of the rivet need not be less than the axial extent by which the rivet is compressed. Preferably, the flexible washer is in the form of a belleville spring washer.

In a second aspect of the invention there is provided a friction clutch comprising a pressure plate connected to a clutch housing by one or more lift straps, the lift straps being attached to the pressure plate by a rivet having shank which engages in a blind hole in the pressure plate, characterised in that the rivet is compressed against the base of the hole such that the shank of the rivet barrels outwards to frictionally engages the side of the hole.

Various embodiments of the invention will now be described by way of example only with reference to the accompanying drawings, in which:
Figure 1 is an elevation showing one half of a friction clutch pressure plate assembly;
Figure 2 is a cross section of the pressure plate assembly of Figure 1 taken along line X-X of Figure 1;
Figure 3 is cross section taken along line Y-Y of Figure 1 showing a lift strap connected to the pressure plate by means of a rivet engaging in a blind hole in accordance with the invention;
Figure 4a is an enlarged view of part of Figure 3 shown the lift strap assembled to the pressure plate by a rivet but prior to the rivet being compressed;
Figure 4b is a view similar to Figure 4a showing the assembly after the rivet has been compressed;
Figure 5 is a view similar to that of Figure 4b showing a modified rivet assembly in accordance with the invention; and
Figure 6 is also a view similar to Figure 4b showing a further modified rivet assembly in accordance with the invention.

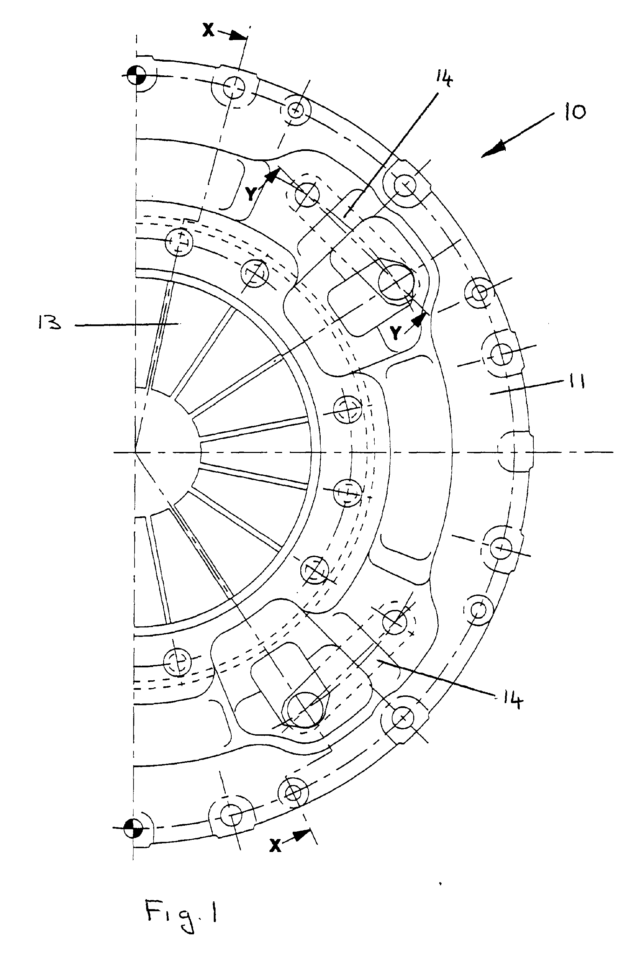

Figures 1 to 3 show a friction clutch pressure plate assembly 10 for a motor vehicle comprising a clutch cover 11, a pressure plate 12 and a diaphragm spring 13. The pressure plate 12 is connected to the clutch cover via four tangential lift straps 14 which ensure that the pressure plate is rotationally fixed with the clutch cover but is able to move axially, to a limited degree, relative to the clutch cover 11. The diaphragm spring 13 is pivotally mounted to the cover 11 via two pivot rings 15, 16. A radially outer portion 17 of the diaphragm spring 13 contacts the pressure plate 12 to bias the pressure plate axially away from the clutch cover.

The friction clutch pressure plate assembly 10 so far described is entirely conventional. Since the operation of the pressure plate assembly plays no part in the present invention and will in any case be readily understood by those skilled in the art, it will not be described any further.

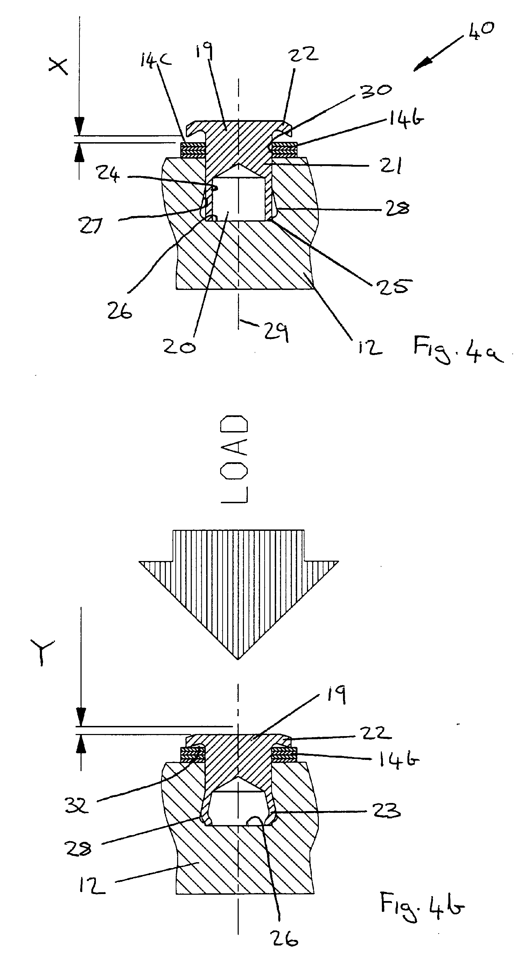

As can best be seen in Figure 3, each of the tangential lift straps 14 is attached at one end 14a to the clutch cover 11 by a rivet 18 in a manner known in the art. The other end of each lift strap 14b is attached to the pressure plate 12 via a further rivet 19 engaging in a blind hole 20 in the pressure plate in accordance with the invention.

The inventive method of riveting the end 14b of the each lift strap 14 to the pressure plate 12 will now be described with reference to Figures 4a and 4b which show a rivet assembly 40 comprising a lift strap 14 (otherwise known as a first member), a pressure plate 12 (otherwise known as a support member) and a rivet 19. Figure 4a shows the assembly 40 prior to compression of the rivet 19 whilst Figure 4b shows the assembly after the rivet has been compressed.

The rivet 19 is made of steel and has a shank 21 and a head 22. The shank 21 has a hollow portion 23 formed by a blind bore 24 which extends from a first end 25 of the shank part way through the rivet.

The pressure plate 12 has a blind hole 20 which hole has a base 26 and a side 27. The side 27 of the blind hole 20 is formed with an undercut 28 in the region close to the base 26. The base 26 of the hole is substantially flat and is formed substantially perpendicular to the axis 29 of the hole 20.

To assemble the lift strap 14 to the pressure plate 12, the rivet 19 is inserted through a hole 30 in the end 14b of the lift strap 14 into the blind hole 20 until the first end 25 of the shank 21 of the rivet contacts the base 26 of the blind hole 20 as shown in Figure 4a. In this position the head 14 of the rivet overlies the lift strap 14 on the side 14c remote from the pressure plate 12. The length of the shank 21, the depth of the blind hole 20. and the thickness of lift strap 14 are selected such that with the first end 25 of the rivet 19 in contact with the base 26 there is a gap X between the head 22 of the rivet and the lift strap 14.

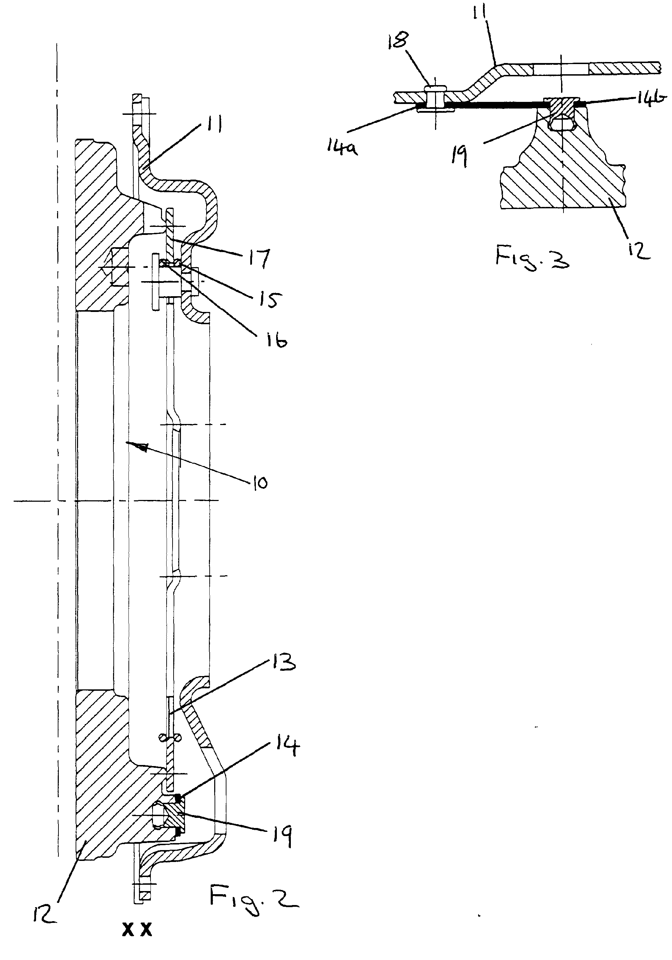

A load is then applied to the head 22 of the rivet 19 to compress the rivet against the base 26 of the blind hole 20 whilst supporting the pressure plate 12. As the rivet 19 is compressed the hollow portion 23 of the shank 21 barrels outwards into frictional engagement with the undercut portion 28 of the blind hole 18 as shown in Figure 2.

In the embodiment disclosed, the rivet is compressed by an amount Y which is greater than the gap X between the head 22 of the rivet and the lift strap 14 prior to compression of the rivet. As the rivet is compressed the head 22 is elastically deformed in an axial direction to firmly clamp the lift strap to the pressure plate. The head 22 is provided with an undercut 32 where the head joins the shank 21 to assist in the elastic deformation. In a typical assembly, the distance Y by which the rivet is compressed will be between 1 and 3 mm whilst the gap X between the head 22 and the lift strap 14 will be between 0.6 and 2.7 mm as appropriate. For example distance Y may be 1.50 mm in which case the gap X may be 1.15mm. However, the precise dimensions of the distance Y and gap X can be selected as appropriate and are not essential to the invention.

Figure 5, shows a modified rivet assembly 140. In this arrangement the rivet 119 has a bore 124 which extends completely through the rivet. The use of a through bore 124 rather than a blind bore helps to reduce the overall weight of the pressure plate assembly and reduces the cost of production of the rivets 119.

The blind hole 120 is similar to the blind hole 20 in pressure plate assembly 10 except that the undercut 128 is formed approximately halfway down the hole 120 rather than towards the base of the hole. When a compression force is applied to the head of the rivet, the shank 121 barrels outwards to fill the undercut 128 as shown.

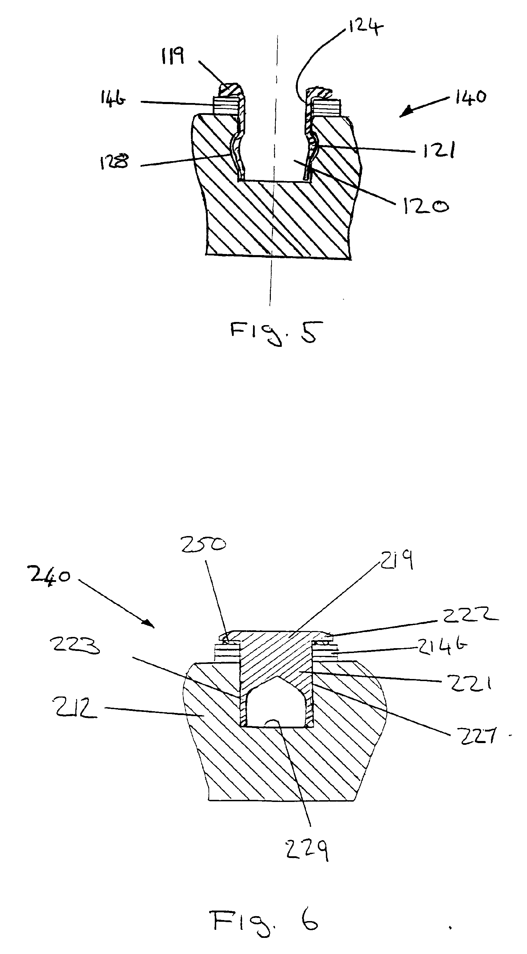

Figure 6 shows a further modified rivet assembly 240. Assembly 240 is similar to assembly 40 shown in Figure 4b except that the side of the bore 227 does not have an undercut and a belleville washer 250 is provided between the head 222 of the rivet and the lift strap 214. In this embodiment the shank 221 of the rivet will barrel outwards into contact with the side 227 of bore 220. The barrelling will occur predominantly in the hollow region 223 of the shank. As the rivet is compressed the head 222 of the rivet will compress the belleville washer 250 so that the belleville washer exerts a clamping force on the lift strap 214. This ensures that any free play between the head 222 and the lift strap 214 and pressure plate 212 after riveting is compensated for by the clamping force of the washer 250. It will of course be understood that whilst the embodiment described use a belleville spring washer, any suitable form of flexible washer could be used so long as it produces the required clamping force.

The arrangements described above are examples only of the inventive method of riveting which is defined in the accompanying claims. It should be noted in particular that although the method of riveting has been described with reference to the attachment of a lift strap to a pressure plate in a friction clutch, use of the method it is not limited to this particular application and can be used generally where there is a need or preference to rivet into a blind hole. The skilled person will also recognise many variations which can be made to the method in accordance with the claims.

## Claims

1. A method of riveting characterised by comprising the steps of:
a) providing a rivet (19) having a shank (21), the shank being hollow (23) at least in the region adjoining a first end (25) of the shank;
b) inserting the shank of the rivet through a hole (30) in a first member (14) and into a blind hole (20) in a support member (12) so that the first end (25) of the shank contacts the base (26) of the blind hole; and
c) compressing the rivet against the base of the hole such that the shank of the rivet barrels outwardly to frictionally engage the side (27) of the hole.

2. A method of riveting according to claim 1 characterised in that the base (26) of the blind hole is formed substantially perpendicular to the axis of the hole (20).

3. A method of riveting according to claims 1 or claim 2 characterised in that the rivet (19) is made of steel.

4. A method of riveting according to anyone of claims 1 to 3 characterised in that the support member is a pressure plate (12) of a friction clutch (10) and the first member is a lift strap (14).

5. A method according to any one of claims 1 to 4 characterised in that the hollow portion (23) of the shank (21) is provided by a central bore (24) extending at least part way through the rivet (19).

6. A method according to claim 5 characterised in that the central bore (24) is a blind bore extending part way along the shank (21) of the rivet from the first end (25) of the shank.

7. A method according to claim 5 characterised in that the central bore is a through bore (124) extending completely through the rivet (119).

8. A method according to any preceding claim characterised in that the hole (20, 120) has an undercut (28, 128).

9. A method according to claim 8 characterised in that the undercut (28) is provided in a region adjacent to the base (26) of the blind hole (20).

10. A method according to claim 8 characterised in that the undercut (128) is provided in a region part way down the hole (120) remote from the base.

11. A method according to any of claims 8 to 10 characterised in that the hollow portion (23) of the shank (21) is arranged so as to substantially align with the undercut (28) when the rivet (19) is inserted in the blind hole (20).

12. A method according to any one of claims 8 to 11 characterised in that the shank (21) of the rivet (19) barrels outwardly to substantially fill the undercut (28).

13. A method according to any preceding claim characterised in that the rivet (19) has a head (22) which overlies the first member (14), the length of the rivet (19) and the depth of the blind hole (20) being selected such that when the rivet is inserted in the hole with the first end (25) of the shank (21) in contact with the base (26) of the hole there is a gap (X) between the head of the rivet and the first member which gap is less than the axial dimension (Y) by which the rivet is subsequently compressed.

14. A method according to claim 13 characterised in that the head (22) of the rivet is elastically deformed in an axial direction during said compression such that the first member (14) is securely clamped between the head of the rivet and the support member (12).

15. A method according to claim 14 characterised in that the surface of the head (22) of the rivet closest to the first member (14) is provided with an undercut (32) in the region where the surface meets the shank (21) to assist in the axial deformation of the head during compression of the rivet.

16. A method according to any one of claims 1 to 12 characterised in that the rivet (219) has a head (222) which overlies the first member (214) and a flexible washer (250) is provided between the head and the first member such that when the rivet is compressed, the flexible washer is compressed between the head and the first member.

17. A method according to claim 16 characterised in that the flexible washer (250) is in the form of a belleville spring washer.

18. A friction clutch comprising a pressure plate (12) connected to a clutch cover (11) by one or more lift straps (14), the or each lift strap being attached to the pressure plate by means of a rivet (19) which engages in a blind hole (20) in the pressure plate, characterised in that the rivet (19) is rivetted in the blind hole (20) using a method in accordance with any one of the preceding claims.

19. A friction clutch comprising a pressure plate (12) connected to a clutch cover (11) by one or more lift straps (14), the or each lift strap being attached to the pressure plate by means of a rivet (19) which engages in a blind hole (20) in the pressure plate, characterised in that the rivet has a shank (21) with a hollow portion (23) and the rivet is compressed against the base (26) of the hole such that the shank of the rivet barrels radially outwardly to frictionally engage the side (27) of the hole.
